**Europäisches Patentamt**

**European Patent Office**

**Office européen des brevets**

(19)

(11) Numéro de publication: **0 232 498**
**B1**

(12) **FASCICULE DE BREVET EUROPEEN**

(45) Date de publication du fascicule du brevet: **25.04.90**

(51) Int. Cl.⁵: **H 01 S 3/03**

(21) Numéro de dépôt: **86116803.7**

(22) Date de dépôt: **03.12.86**

(54) **Laser à gaz équipé de vannes à trois fonctions.**

(30) Priorité: **16.12.85 FR 8518745**

(43) Date de publication de la demande:
**19.08.87 Bulletin 87/34**

(45) Mention de la délivrance du brevet:
**25.04.90 Bulletin 90/17**

(84) Etats contractants désignés:
**CH DE GB LI NL**

(56) Documents cités:
**EP-A-0 048 690**
**FR-A-2 086 481**
**FR-A-2 497 009**
**US-A-3 851 273**

(73) Titulaire: **ASULAB S.A.**
**Faubourg du Lac 6**
**CH-2501 Bienne (CH)**

(72) Inventeur: **Jürg, Steffen**
**Dorf**
**CH-3655 Sigriswil (CH)**

(74) Mandataire: **de Raemy, Jacques et al**
**ICB Ingénieurs Conseils en Brevets SA Passage**
**Max. Meuron 6**
**CH-2001 Neuchâtel (CH)**

Courier Press, Leamington Spa, England.

## Description

L'invention est relative à un laser à gaz comportant une cavité résonante terminée par un premier et un second miroir, un tube à décharge situé entre les miroirs, une source de gaz dont le débit peut être contrôlé, un manomètre pour mesurer la pression de gaz régnant à l'intérieur de la cavité et des moyens de pompage susceptibles entre autres d'évacuer l'air ou le gaz se trouvant à l'intérieur de la cavité.

Pour permettre une utilisation aussi universelle que possible d' un laser à gaz, il est souhaitable non seulement de pouvoir changer les miroirs terminant la cavité résonante mais encore de changer le type de gaz utilisé comme milieu amplificateur et contenu dans le tube à décharge.

Le laser modèle 2020 proposé par la société Spectra-Physics, Mountain View (USA), est composé d'un tube à décharge scellé et terminé par une paire de fenêtres de Brewster. Ce tube est monté dans un châssis qui porte les miroirs. Ce système dit modulaire donne bien libre accès aux miroi rs puisque ceux-ci se trouvent en dehors du tube étanche, mais il ne permet pas de travailler avec des gaz différents et si cela devait être le cas il serait nécessaire de changer tout le tube, comme cel a est d'ailleurs prévu dans la notice éditée par la société en question. On mentionnera encore ici que l'emploi de fenêtres de Brewster n'est pas souhaitable puisque ces fenêtres occasionnent une perte de puissance importante, puissance qui est réduite d'environ la moitié de cel le qu'on peut atteindre si lesdites fenêtres sont absentes. Le laser proposé dans la citation permet néanmoins le changement des miroirs sans toucher au tube à décharge. Ce changement est souhaitable d'abord pour des raisons de maintenance car il faut pouvoir remplacer un miroir simplement défectueux ou dont la couche réfléchissante se serait altérée. Ensuite, on doit pouvoir utiliser des miroirs dont la courbure est différente pour obtenir des modes transverses électromagnétiques (TEM) qui soient différents. Enfin, en changeant la nature de la couche réfléchissante apposée sur le miroir, on peut modifier la composition spectrale du faisceau laser.

Contrairement au mode de réalisation qui vient d'être décrit plus haut, le dispositif laser décrit dans le brevet EP 0 048 690 permet de changer le gaz contenu dans le tube à décharge. A cet effet sont prévues une première vanne de pompage et une seconde vanne de remplissage. Cependant, les miroirs sont ici en liaison directe avec le tube à décharge et on comprend qu'il ne sera pas possible de les changer sans mettre tout l'intérieur du tube à décharge à la pression atmosphérique. Ceci présente l'inconvénient de devoir à nouveau faire le vide dans la cavité après le changement de miroir et avant d'y introduire le gaz, ce qui prend beaucoup de temps et peut durer, pour des lasers de grandes dimensions, plusieurs jours. Par contre, s'il était possible d'isoler les miroirs du tube à décharge, on pourrait maintenir pendant cette opération la très faible pression dans le tube, ce qui permettrait de rendre le laser à nouveau opérationnel après très peu de temps. On observera que le changement de gaz permet de modifier la composition spectrale du rayon laser; par exemple l'argon produit une teinte bleue et verte et le krypton une teinte jaune et rouge.

C'est le but de la présente invention de remédier aux inconvénients présentés par l'un et l'autre des lasers précèdemment décrits en mettant en oeuvre des moyens permettant pour un même dispositif laser de changer les miroirs de la cavité et/ou de remplacer le gaz par un autre gaz sans exposer le tube à décharge à la pression atmosphérique.

Pour cela, le tube à gaz est caractérisé par le fait qu'il comprend une première vanne interposée entre la première extrémité du tube et le premier miroir et une seconde vanne interposée entre la seconde extrémité du tube et le second miroir, lesdites vannes étant susceptibles de mettre en communication au moins les moyens de pompage avec la cavité résonante, chacune desdites vannes comportant un corps percé d'orifices et un élément mobile ajusté dans ce corps et susceptible d'être placé dans une première position, dite de fonctionnement, pour laquelle le rayon lumineux produit dans le tube à décharge traverse les vannes pour atteindre les miroirs, les moyens de pompage étant isolés de la cavité, dans une deuxième position, dite d'accès aux miroirs, pour laquelle lesdits miroirs sont isolés de la cavité et des moyens de pompage, et dans une troisième position, dite de changement de gaz, pour laquelle la cavité est mise en communication avec les moyens de pompage pour évacuer le gaz contenu dans ladite cavité.

L'invention sera expliquée maintenant au moyen de la description qui suit, illustrée à titre d'exemple par des dessins dans lesquels.

La figure 1 est une représentation schématique du laser à gaz selon un premier mode d'exécution de l'invention;

La figure 2 est une représentation schématique du laser à gaz selon un deuxième mode d'exécution de l'invention;

La figure 3 est une vue en coupe d'une des vannes représentée à la figure 2;

Les figures 4a, 4b et 4c sont des représentations schématiques du laser à gaz selon un troisième mode d'exécution de l'invention, chacune des représentations illustrant des fonctions différentes;

La figure 5 est une vue en coupe d'une des vannes représentée aux figures 4a à 4c; et

La figure 6 est une coupe selon la ligne VI—VI de la figure 5.

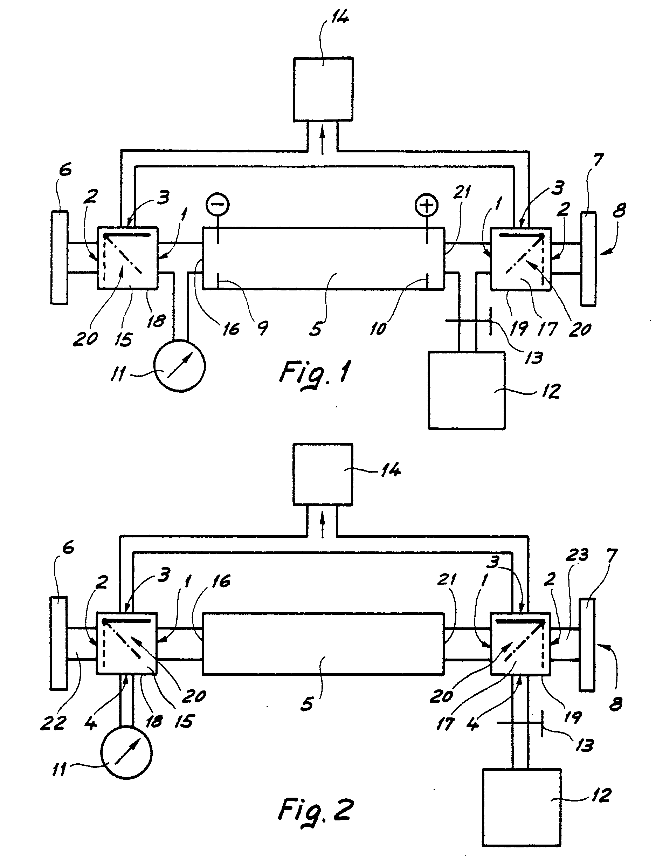

La figure 1 est une représentation schématique du laser à gaz selon un premier mode d'exécution de l'invention et selon son acception la plus large. Le laser comporte un tube à décharge 5 dont on trouvera une description exemplaire dans le brevet EP 0 048 690 cité plus haut. Ce tube est situé entre des premier et second miroirs 6 et 7 qui forment avec lui la cavité résonante 8. Le gaz contenu dans le tube est ionisé par une cathode 9 et une anode 10 reliées à une source d'énergie continue symbolisée par les signes + et −. Des détails de construction concernant les électrodes ainsi que tout le système de refroidissement du tube sont également apparents dans le brevet cité plus haut. Un manomètre 11 pour mesurer la pression du gaz contenu dans la cavité 8 et une source de gaz 12 dont le débit peut être contrôlé par une vanne 13 sont mis en communication d'une façon ou d'une autre avec la cavité 8. Des moyens de pompage 14 sont prévus pour permettre entre autres soit d'évacuer l'air se trouvant à l'intérieur de la cavité quand elle doit être vidée pour la première fois, soit de pomper le gaz qui s'y trouve quand il s'agit de remplacer ce gaz par un autre gaz. On verra plus loin que les moyens de pompage 14 peuvent également servir à faire circuler du gaz frais dans le dispositif.

La figure 1 montre que le laser selon l'invention comprend une première vanne 15 interposée entre la première extrèmité 16 du tube 5 et le premier miroir 6 et une seconde vanne 17 interposée entre la seconde extrémité 21 du tube 5 et le second miroir 7 et que lesdites vannes sont susceptibles de mettre en communication au moins les moyens de pompage 14 et la cavité 8. Chacune des vannes 15 et 17 comprend un corps de vanne fixe symbolisé respectivement par les références 18 et 19 et comportant, dans l'exemple de la figure 1, trois orifices représentés par les références 1, 2 et 3. Dans chacun des corps de vanne 18 et 19 est ajusté un élément mobile 20. Cet élément peut être placé dans une première position, correspondant au trait plein, pour laquelle le rayon lumineux produit dans le tube à décharge traverse les vannes 15 et 17 pour atteindre les miroirs 6 et 7. C'est la position de fonctionnement normal du laser. L'élément mobile peut encore être placé dans une deuxième position, correspondant au trait pointillé, pour laquelle les miroirs 6 et 7 sont isolés du tube à décharge 5 et des moyens de pompage 14. C'est la position d'accès aux miroirs pour laquelle lesdits miroirs peuvent être changés sans modifier les conditions de pression régnant à l'intérieur du tube. L'élément mobile peut enfin être placé dans une troisième position, correspondant au trait mixte, pour laquelle la cavité 8 est mise en communication avec les moyens de pompage 14 pour faire le vide ou évacuer l'air ou le gaz contenu dans la cavité. C'est la position dite de pompage.

On voit donc que par ce dispositif, il est très aisé soit de changer les miroirs, soit de changer le gaz sans qu'il soit nécessaire d'exposer la cavité à la pression atmosphérique et que ces opérations peuvent être réalisées au moyen de deux vannes qui peuvent être placées chacune dans trois positions fonctionnelles différentes.

Dans ce premier mode d'exécution, on s'aperçoit aussi que 1e manomètre 11 est mis en communication avec la cavité 8 à un endroit situé entre la vanne 15 et l'extrémité 16 du tube 5. 11 en est de même de la source de gaz 12 qui est mise en communication avec la cavité 8 à un endroit situé entre la vanne 17 et l'extrémité 21 du tube 5. Dans ce cas, chacune des vannes 15 et 17 possèdent trois orifices 1, 2 et 3. On comprendra cependant qu'on peut profiter de la présence des vannes pour mettre en communication la cavité 8 avec le manomètre 11 par la première vanne 15 et ladite cavité 8 avec la source de gaz 12 par la seconde vanne 17. Ce cas est illustré dans les figures suivantes et les vannes sont alors pourvues de quatre orifices.

La figure 2 est un deuxième mode d'exécution de l'invention et reprend dans les grandes lignes ce qui a été montré à propos de la figure 1. Le corps 18 de la première vanne 15 comporte un premier orifice 1 relié au tube à décharge 5, un deuxième orifice 2, coaxial au premier, relié à une première chambre 22 supportant le premier miroir 6, un troisième orifice 3 dont l'axe coupe sensiblement à angle droit l'axe des premier et deuxième orifices et relié aux moyens de pompage 14, et un quatrième orifice 4, coaxial au troisième, relié au manomètre 11. De même, le corps 19 de la seconde vanne 17 comporte un premier orifice 1 relié au tube à décharge 5, un deuxième orifice 2, coaxial au premier, relié à une seconde chambre 23 supportant le second miroir 7, un troisième orifice 3 dont l'axe coupe sensiblement à angle droit l'axe des premier et deuxième orifices et relié aux moyens de pompage 14, et un quatrième orifice 4, coaxial au troisième, relié à la source de gaz 12.

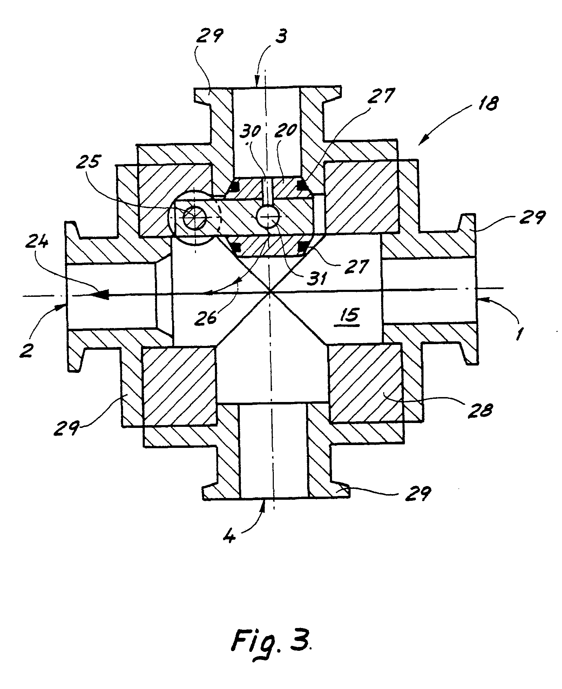

La figure 3 est une vue en coupe de la vanne 15 représentée à la figure 2. La vanne se compose du corps de vanne 18 et d'un élément mobile se présentant sous la forme d'un clapet 20. Le clapet 20 peut pivoter autour de l'axe de rotation 25 qui se trouve en dehors du chemin parcouru par le rayon lumineux réfléchi par les miroirs, chemin symbolisé par la flèche 24. L'axe 25 est commandé par une poignée non représentée. Dans la figure 3, le clapet est disposé dans une première position pour laquelle le troisième orifice 3 du corps de vanne est obstrué. Cette situation est celle du fonctionnement du laser. Si l'on désire maintenant isoler le miroir situé en prolongement de la sortie 2 de la vanne, on fera pivoter le clapet 20 de 90° en direction de la flèche 26. Le deuxième orifice 2 du corps de vanne est alors obstrué, ce qui permet de remplacer le miroir sans exposer la cavité à la pression atmosphérique. Enfin, si le clapet est disposé dans une troisième position située à mi-chemin entre les première et deuxième positions, aucun des quatre orifices de la vanne n'est obstrué. Le gaz présent dans la cavité peut être évacué puis remplacé par un gaz d'une autre nature, l'introduction du nouveau gaz se faisant par l'orifice 4 de la vanne 17 représentée en figure 2.

Le dessin de la figure 3 montre que des dispositions sont prises pour assurer l'étanchéité du clapet 20, dispositions se présentant sous la forme de garnitures O-rings 27. Comme on peut le voir encore au dessin, le corps de vanne 18 se compose principalement d'un corps cubique 28 percé par quatre orifices sur chacun desquels est ajustée une embouchure 29. La vanne 17 montrée à la figure 2 est identique à celle qui vient d'être décrite pour des raisons de symétrie, étant entendu qu'elle se présente de la même façon mais tournée de 180° par rapport à l'axe 3—4.

La figure 3 montre encore que la première vanne 15 est pourvue d'un dispositif de dérivation pour permettre une circulation de gaz frais si cela est jugé nécessaire. A cet effet, le clapet 20 est équipé d'un premier conduit 30 aboutissant à un second conduit 31. Le conduit 31 peut être obturé par une tige non représentée et accessible de l'extérieur de la vanne. Si une circulation de gaz est désirée, on débouche le conduit 31. Il y aura alors circulation de gaz frais par le chemin suivant: source de gaz 12, vanne 13, tube à décharge 5, vanne 15, circuit de dérivation 31—30 et moyens de pompage 14 (voir figure 2). Il va de soi que si la vanne 17 est pourvue d'un même système de circulation, il faudra maintenir fermé son conduit 31 pour que ladite circulation se réalise selon le chemin mentionné.

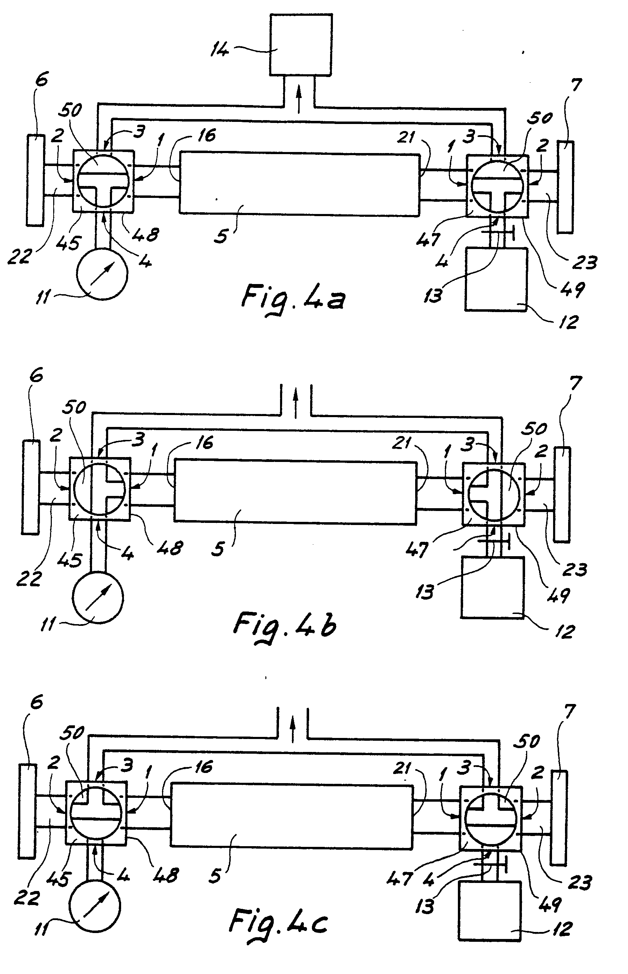

Les figures 4a, 4b et 4c sont des représentations schématiques du laser à gaz selon un troisième mode d'exécution de l'invention. L'arrangement général du système est semblable à celui expliqué au sujet de la figure 2 sauf en ce qui concerne les vannes 45 et 47 dont la conception est différente. Aussi retrouve-t-on dans les figures 4a à 4c le tube à décharge 5, les miroirs 6 et 7, les moyens de pompage 14, le manomètre 11 et la source de gaz 12 avec la vanne associée 13. Les vannes 45 et 47 comprennent chacune un corps de vanne 48 et 49 comportant quatre orifices 1 à 4. Ces orifices sont reliés aux pièces composant le laser de la même façon que cela a été décrit précédemment pour les autres modes d'exécution. L'élément mobile 50 ajusté dans le corps de vanne présente une ouverture en forme de T qui met en communication simultanément trois des orifices du corps de vanne. Il s'agit là d'une réalisation préférée, plus facile à fabriquer.

La figure 4a présente le laser en situation de fonctionnement. Les orifices 1 et 2 sont reliés par la branche traversante du T et le rayon produit dans le tube 5 peut atteindre les miroirs 6 et 7. Dans cette situation, le manomètre 11 est relié à la cavité par l'entrée 4 de la vanne 45 et la source de gaz 12 est également reliée à la cavité par l'entrée 4 de la vanne 47. La pression intérieure de travail (de l'ordre de 0,1 à 10 mbar) peut donc être vérifiée et l'injection de gaz frais peut être commandée par la vanne 13.

La figure 4b présente le laser en situation de changement des miroirs 6 et 7. Ici, les miroirs sont isolés du tube 5 et peuvent être échangés sans modifier la pression régnant dans le tube.

La figure 4c présente le laser en situation de changement de gaz. Ici l'ancien gaz est pompé par les moyens de pompage 14. On comprendra que l'opération d'évacuation ainsi conçue est de très courte durée puisque la cavité n'a pas été soumise à la pression atmosphérique. Cette situation permet de pomper l'air qui a pénétré dans les chambres 22 et 23 si l'opération précédente était un changement de miroirs. Enfin, il est encore possible dans cette situation de faire le premier vide dans la cavité lors d'une opération de mise en marche. Dans ce dernier cas, un manomètre supplémentaire non représenté peut être présent du côté pompe qui permettra de contrôler le vide poussé qui doit être atteint (de l'ordre de $10^{-5}$ à $10^{-6}$ mbar).

Pour passer d'une situation à l'autre on tourne l'élément mobile de gauche 50 dans le sens anti-horaire et l'élément mobile de droite 50 dans le sens horaire chaque fois d'un quart de tour. Pour passer de la situation de la figure 4c à celle de la figure 4a, on tourne l'élément mobile 50 d'un demi-tour dans un sens ou dans l'autre.

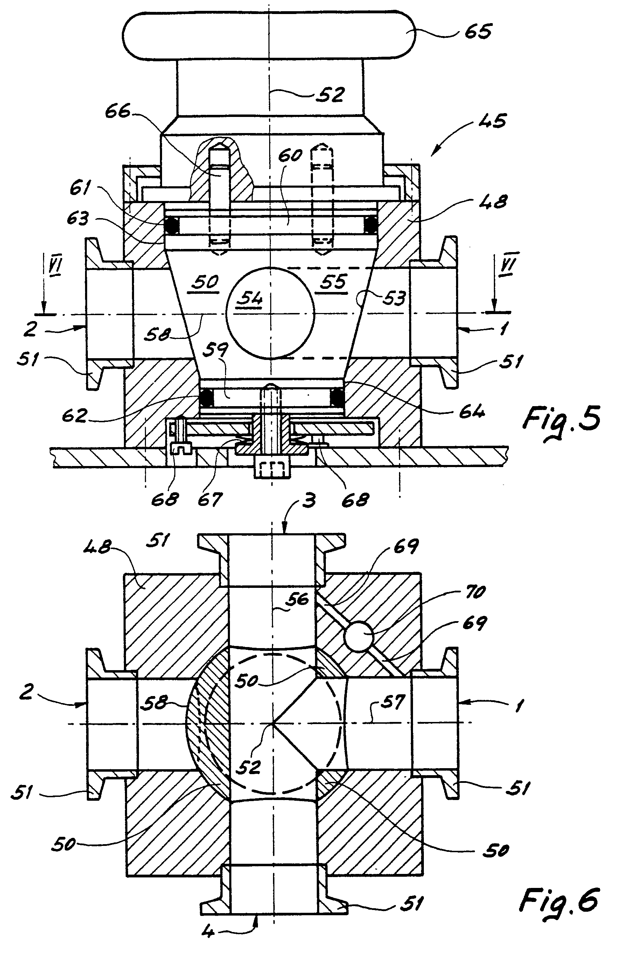

Les figures 5 et 6 montrent dans le détail comment peut être réalisée la vanne 45 des figures 4a à 4c. On mentionnera que par raison de symétrie la vanne 47 est identique. La figure 5 est une vue en coupe de la vanne 45 et la figure 6 est une coupe selon la ligne VI—VI tracée sur la figure 5.

Le corps de vanne 48 se compose principalement d'un corps cubique percé de quatre orifices 1 à 4 sur chacun desquels est ajustée une embouchure 51. L'élément mobile 50 qui a été ajusté dans le corps de vanne 48 a la forme d'un tronc de cône qui peut tourner autour de son axe 52. L'élément 50 est monté dans un siège 53 de même forme tronconique pratiqué dans le corps de vanne. L'élément tronconique 50 est pourvu de deux perçages 54 et 55 perpendiculaires l'un à l'autre et dont les axes 56 et 57 sont situés dans un plan 58 perpendiculaire à l'axe 52 du tronc de cône 50, le premier perçage 54 étant pratiqué selon un diamètre du cercle formé par l'intersection de ce plan et du tronc de cône 50, et le second 55 selon un rayon du même cercle. On s'arrange naturellement pour que les perçages 54 et 55 soient situés au même niveau que les orifices 1 à 4 percés dans le corps de vanne. L'élément mobile 50 peut ainsi être disposé dans une première position, montrée à la figure 4a, pour laquelle les orifices 1, 2 et 4 sont reliés, dans une deuxième position, représentée à la figure 4b et aux figures 5 et 6, pour laquelle les orifices 1, 3 et 4 sont reliés et dans une troisième position, représentée à la figure 4c, pour laquelle les orifices 1, 2 et 3 sont reliés.

Pour assurer une étanchéité parfaite de l'élément tronconique 50 dans son siège 53, la figure 5 montre qu'il est terminé à chacune de ses extrémités par un prolongement cylindrique 59 et 60. Chacun de ces prolongements est pourvu d'une rainure dans laquelle vient se loger une garniture d'étanchéité 61 et 62 qui coopère avec des prolongements cylindriques 63 et 64 portés par le siège 53 du corps de vanne. La figure 5 montre aussi que l'élément mobile est muni d'une poignée de commande 65 fixée par des vis 66. Le même élément 50 est maintenu emboîté dans son siège 53 par des moyens élastiques qui se présentent sous la forme d'un ressort 67. Le dessin montre qu'en vissant plus ou moins les vis 68, on peut faire varier la force d'application du mobile 50 dans son siège 53. Pour éviter le grippage du mobile dans son siège, on revêtira l'une des surfaces en présence, Par exemple le mobile tronconique, d'une couche antifriction. Ceci peut être réalisé avantageusement par un dépôt PVD de sulfure de molybdène ($MoS_2$).

L'invention n'est pas limitée à la forme tronconique de l'élément mobile. Ce pourrait être aussi un cylindre qui toutefois pourrait présenter en s'usant des défauts d'étanchéité.

On signalera enfin que la vanne qui vient d'être décrite peut porter, pour les mêmes raisons que celles données plus haut, une dérivation entre les orifices 1 et 3. La figure 6 montre cette dérivation qui comprend un premier conduit 69 interrompu par un second conduit 70 auquel est ajustée une tige d'obturation non représentée.

## Revendications

1. Laser à gaz comportant une cavité résonante (B) terminée par un premier (6) et un second (7) miroir, un tube à décharge (5) situé entre lesdits miroirs, une source de gaz (12) dont le débit peut être contrôlé, un manomètre (11) pour mesurer la pression de gaz régnant à l'intérieur de la cavité et des moyens de pompage (14) susceptibles entre autres d'évacuer l'air ou le gaz se trouvant à l'intérieur de la cavité, caractérisé par le fait qu'il comprend une première vanne (15, 45) interposée entre la première extrémité (16) du tube et le premier miroir (6) et une seconde vanne (17, 47) interposée entre la seconde extrémité (21) du tube et le second miroir (7), lesdites vannes étant susceptibles de mettre en communication au moins les moyens de pompage avec la cavité résonante, chacune desdites vannes comportant un corps (18, 19, 48, 49) percé d'orifices (1, 2, 3, 4) et un élément mobile (20, 50) ajusté dans ce corps et susceptible d'être placé dans une première position, dite de fonctionnement, pour laquelle le rayon lumineux produit dans le tube à décharge traverse les vannes pour atteindre les miroirs, les moyens de pompage étant isolés de la cavité, dans une deuxième position, dite d'accès aux miroirs, Pour laquelle lesdits miroirs sont isolés du tube à décharge et des moyens de pompage, et dans une troisième position, dite de changement de gaz, pour laquelle la cavité est mise en communication avec les moyens de pompage pour évacuer le gaz contenu dans ladite cavité.

2. Laser à gaz selon la revendication 1, caractérisé par le fait qu'en outre la première vanne (15, 45) est susceptible de mettre en communication la cavité résonante (8) avec le manomètre (11) et la seconde vanne (17, 47), la source de gaz (12) avec ladite cavité résonante.

3. Laser à gaz selon la revendication 1 ou la revendication 2, caractérisé par le fait que la première vanne est pourvue d'un dispositif de dérivation (30, 31, 69, 70) pour permettre une circulation de gaz frais, ledit dispositif pouvant être mis en action quand 1'élément mobile est placé dans la première position.

4. Laser à gaz selon la revendication 2, caractérisé par le fait que le corps (18, 48) de la première vanne (15, 45) comporte un premier orifice (1) relié au tube à décharge (5), un deuxième orifice (2), coaxial au premier, relié à une première chambre (22) supportant le premier miroir (6), un troisième orifice (3) dont l'axe coupe sensiblement à angle droit l'axe des premier et deuxième orifices et relié aux moyens de pompage (14), et un quatrième orifice (4), coaxial au troisième, relié au manomètre (11) et que le corps (19, 49) de la seconde vanne (17, 47) comporte un premier orifice (1) relié au tube à décharge (5), un deuxième orifice (2), coaxial au premier, relié à une seconde chambre (23) supportant le second miroir (7), un troisième orifice (3) dont l'axe coupe sensiblement à angle droit l'axe des premier et deuxième orifices et relié aux moyens de pompage (14) et un quatrième orifice (4), coaxial au troisième, relié à la source de gaz (12).

5. Laser à gaz selon la revendication 4, caractérisé par le fait que l'élément mobile ajusté dans le corps des première et seconde vannes se présente sous la forme d'un clapet (20) dont l'axe de rotation (25) se trouve en dehors du chemin parcouru par le rayon lumineux réfléchi par les miroirs, ledit clapet pouvant être disposé dans une première position pour laquelle le troisième orifice (3) de chacun des corps de vanne est obstrué, dans une deuxième position sensiblement perpendiculaire à la première pour laquelle le deuxième orifice (2) de chacun des corps de vanne est obstrué et dans une troisième position située à mi-chemin entre les première et deuxième position pour laquelle aucun des quatre orifices (1, 2, 3, 4) de chacun des corps de vanne n'est obstrué.

6. Laser à gaz selon la revendication 4, caractérisé par le fait que l'élément mobile ajusté dans le corps des première est seconde vannes est un tronc de cône (50) susceptible de tourner autour de son axe (52) et monté dans un siège (53) de même forme pratiqué dans le corps de vanne, ledit tronc de cône étant pourvu de deux perçages (54, 55) perpendiculaires l'un à l'autre et dont les axes (56, 57) sont situés dans un plan (58) perpendiculaire à l'axe (52) du tronc de cône, le premier perçage (54) étant pratiqué selon un diamètre du cercle formé par l'intersection de ce plan et du tronc de cône, et le second (55) selon un rayon du même cercle pour former une ouverture en forme de T, lesdits perçages étant disposés au même niveau que les orifices percés dans le corps de vanne, ledit élément mobile pouvant être disposé dans une première position pour laquelle les premier, deuxième et quatrième orifices du corps de vanne sont reliés dans une deuxième position pour laquelle les premier, troisième et quatrième orifices du corps de vanne sont reliés et dans une troisième position pour laquelle les premier, deuxième et troisième orifices du corps de vanne sont reliés.

7. Laser à gaz selon la revendication 6, caractérisé par le fait que l'élément mobile tronconique est terminé à chacune de ses extrémités par un prolongement cylindrique (59, 60), une rainure étant pratiquée dans la périphérie desdits prolongements pour contenir une garniture d'étanchéité (61, 62) arrangée pour coopérer avec des prolongements cylindriques (63, 64) portés par le siège du corps de vanne.

8. Laser à gaz selon la revendication 6, caractérisé par le fait que l'élément mobile tronconique est maintenu emboîté dans le corps de vanne par des moyens élastiques (67) et que l'élément mobile porte une poignée de commande (65).

9. Laser à gaz selon la revendication 6, caractérisé par le fait que la surface extérieure du tronc de cône est revêtue d'une couche antifriction.

## Patentansprüche

1. Gaslaser, umfassend einen von einem ersten (6) und einem zweiten (7) Spiegel abgeschlossenen Resonanzhohlraum (8), ein zwischen den Spiegeln angeordnetes Entladungsrohr (5), eine Gasquelle (12), deren Abgabemenge steuerbar ist, ein Manometer (11) zum Messen des im Hohlrauminnern herrschenden Gasdrucks und Pumpmittel (14), mittels denen u.a. die Luft oder das Gas, befindlich im Hohlrauminnern, evakuierbar sind, dadurch gekennzeichnet, daß er ein zwischen dem ersten Ende (16) des Rohrs und dem ersten Spiegel (6) angeordnetes erstes Steuerventil (15, 45) und ein zwischen dem zweiten Ende (21) des Rohrs und dem zweiten Spiegel (7) angeordnetes zweites Steuerventil (17, 47) umfaßt, mittels welcher Steuerventile zumindest die Pumpmittel mit dem Resonanzhohlraum in Kommunikation bringbar sind, wobei jedes der Steuerventile einen mit Bohrungen (1, 2, 3, 4) versehenen Ventilkorpus (18, 19, 48, 49) sowie ein in den Korpus eingepaßtes bewegliches Element (20, 50) umfaßt, das in eine erste, als Funktionsposition bezeichnete Stellung bringbar ist, in welcher das in dem Entladungsrohr erzeugte Strahlenbündel die Steuerventile durchquert, um die Spiegel zu erreichen, wobei die Pumpmittel von dem Hohlraum isoliert sind, in eine zweite, als Spiegelzugangsposition bezeichnete Stellung bringbar sind, in der die Spiegel von dem Entladungsrohr und den pumpmitteln isoliert sind, und in eine dritte, als Gasaustauschposition bezeichnete Stellung bringbar sind, in der der Hohlraum mit den pumpmitteln für das Evakuieren des im Hohlraum enthaltenen Gases kommuniziert.

2. Gaslaser nach Anspruch 1, dadurch gekennzeichnet, daß ferner das erste Steuerventil (15, 45) für das Kommunizierenlassen des Resonanzhohlraums (8) mit dem Manometer (11) ausgebildet ist und das zweite Steuerventil (17, 47) für das Kommunizierenlassen der Gasquelle (12) mit dem Resonanzhohlraum.

3. Gaslaser nach Anspruch 1 oder Anspruch 2, dadurch gekennzeichnet, daß das erste Steuerventil mit einer Umleitvorrichtung (30, 31, 69, 70) versehen ist zum Ermöglichen einer Frischgaszirkulation, welche Umleitvorrichtung aktivierbar ist, wenn das bewegliche Element in die erste Stellung gebracht ist.

4. Gaslaser nach Anspruch 2, dadurch gekennzeichnet, daß der Korpus (18, 48) des ersten Steuerventils (15, 45) eine erste Öffnung (1), verbunden mit dem Entladungsrohr (5), eine zweite zur ersten koaxiale Öffnung, verbunden mit einer ersten, den ersten Spiegel (6) tragenden Kammer (22), eine dritte Öffnung (3), deren Achse im wesentlichen rechtwinklig die Achse der ersten und zweiten Öffnungen schneidet und die mit den Pumpmitteln (14) verbunden ist, sowie eine vierte, zur dritten koaxiale Öffnung (4) umfaßt, verbunden mit dem Manometer (11), und daß der Korpus (19, 49) des zweiten Steuerventils (17, 47) eine erste Öffnung (1), verbunden mit dem Entladungsrohr (5), eine zweite, zur ersten koaxiale Öffnung (2). verbunden mit einer zweiten, den zweiten Spiegel (7) tragenden Kammer (23), eine dritte Öffnung (3), deren Achse die Achse der ersten und zweiten Öffnung schneidet und die mit den Pumpmitteln (14) verbunden ist, sowie eine vierte, zur dritten koaxiale Öffnung (4) umfaßt, die mit der Gasquelle (12) verbunden ist.

5. Gaslaser nach Anspruch 4, dadurch gekennzeichnet, daß das in den Korpus des ersten und des zweiten Ventils eingepaßte bewegliche Element in Form einer Klappe (20) vorliegt, deren Schwenkachse (25) außerhalb des Strahlengangs liegt, der von den von den Spiegeln reflektierten Lichtstrahlen durchlaufen wird, welche Klappe in eine erste Stellung bringbar ist, in der die dritte Öffnung (3) jedes Steuerventilkorpus gesperrt ist, in eine zweite, zur ersten im wesentlichen senkrechte Stellung bringbar ist, in der die zweite Öffnung (2) jedes Steuerventilkorpus gesperrt ist, und in eine dritte, auf halbem Weg zwischen der ersten und zweiten Stellung liegende Stellung bringbar ist, in der keine der vier Öffnungen (1, 2, 3, 4) gesperrt ist.

6. Gaslaser nach Anspruch 4, dadurch gekennzeichnet, daß das in den Korpus des ersten und zweiten Steuerventils eingepaßte bewegliche Element ein um seine Achse (52) drehbarer Kegelstumpf (50) ist, montiert in einem in den Steuerventilkorpus eingearbeiteten Sitz (53) gleicher Form, welcher Kegelstumpf mit zwei zueinander senkrechten Bohrungen (54, 55) versehen ist, deren Achsen (56, 57) in einer zur Achse (52) des Kegelstumpfs senkrechten Ebene (58) liegen, wobei die erste Bohrung (54) längs eines Durchmesser des Kreises verlaufend eingearbeitet ist, der gebildet ist durch den Schnitt dieser Ebene mit dem Kegelstumpf, und die zweite (55) längs eines Radius desselben Kreises zur Bildung einer T-förmigen Öffnung, welche Bohrungen auf demselben Niveau angeordnet sind wie die den Steuerventilkorpus durchsetzenden Öffnungen, welche bewegliche Element in eine erste Stellung bringbar ist, in der die erste, die zweite und die vierte Öffnung des Steuerventilkorpus verbunden sind, in eine zweite Stellung bringbar ist, in der die erste, die dritte und die vierte Öffnung des Steuerventilkorpus verbunden sind, und in eine dritte Stellung bringbar ist, in der die erste, die zweite und die dritte Öffnung des Steuerventilkorpus verbunden sind.

7. Gaslaser nach Anspruch 6, dadurch gekennzeichnet, daß das kegelstumpfförmige bewegliche Element an jedem seiner Enden in eine zylindrische Verlängerung (59, 60) ausläuft, wobei in die Peripherie dieser Verlängerungen eine Nut zur Aufnahme einer Dichtungsgarnitur (61, 62) eingearbeitet ist, ausgebildet zum Zusammenwirken mit von dem Sitz des Ventilkorpus getragenen zylindrischen Verlängerungen (63, 64).

8. Gaslaser nach Anspruch 6, dadurch gekennzeichnet, daß das kegelstumpfförmige bewegliche Element in dem Ventilkorpus durch elastische Mittel (67) eingefügt gehalten ist und daß das bewegliche Element einen Betätigungsgriff (65) trägt.

9. Gaslaser nach Anspruch 6, dadurch gekennzeichnet, daß die Außenfläche des Kegelstumpfs mit einer Antifriktionsbeschichtung bedeckt ist.

## Claims

1. Gas laser including a resonant cavity (8) terminated by a first (6) and a second (7) mirror, a discharge tube (5) located between said mirrors, a gas source (12) the discharge rate of which is controllable, a manometer (11) to measure the gas pressure prevailing within the cavity, pumping means (14) adapted, inter alia, to remove air or gas from within the cavity, characterized by the fact that it comprises a first valve (15, 45) placed between the first end (16) of the tube and the first mirror (6) and a second valve (17, 47) placed between the second end (21) of the tube and the second mirror (7), said valves being adapted to enable communication at least between the pumping means and the resonant cavity, each said valve including a body (18, 19, 48, 49) pierced with orifices (1, 2, 3, 4) and a movable element (20, 50) fitted within said body and adapted to assume a first working position in which the luminous beam produced in the discharge tube traverses the valves to reach the mirrors, the pumping means being isolated from the cavity, a second position for permitting mirror access in which said mirrors are isolated from the discharge tube and the pumping means and a third position for changing gas in which the cavity is placed in communication with the pumping means thereby to remove the gas contained in said cavity.

2. Gas laser according to claim 1, characterized by the fact that the first valve (15, 45) is adapted to place the resonant cavity (8) in communication with the manometer (11) and the second valve (17, 47) is adapted to place the resonant cavity in communication with the gas source (12).

3. Gas laser according to claim 1, characterized by the fact that the first valve is provided with a shunting arrangement (30, 31, 69, 70) to enable circulation of fresh gas, said arrangement being operable when the moving element is placed in the first position.

4. Gas laser according to claim 2, characterized by the fact that the body (18, 48) of the first valve (15, 45) includes a first orifice (1) coupled to the discharge tube (5), a second orifice (2) coaxial with the first orifice coupled to a first chamber (22) supporting the first mirror (6), a third orifice (3) the axis of which intersects the axis of the first and second orifices substantially at a right angle coupled to the pumping means (14) and a fourth orifice (4) coaxial with the third orifice coupled to the manometer (11), and that the body (19, 49) of the second valve (17, 47) includes a first orifice (1) coupled to the discharge tube (5), a second orifice (2) coaxial with the first orifice coupled to a second chamber (23) supporting the second mirror (7), a third orifice (3) the axis of which intersects the axis of the first and second orifices substantially at a right angle coupled to the pumping means (14) and a fourth orifice (4) coaxial with the third orifice coupled to the gas source (12).

5. Gas laser according to claim 4, characterized by the fact that the movable element fitted within the body of the first and second valves takes the form of a flap (20) the axis of rotation (25) of which is outside the path traversed by the luminous beam reflected by the mirrors, said flap being adapted to be placed in a first position in which the third orifice (3) of each of the valve bodies is blocked, in a second position substantially perpendicular to the first position in which the second orifice (2) of each of the valve bodies is blocked and in a third position situated midway between the first and second positions in which none of the four orifices (1, 2, 3, 4) of each of the valve bodies is blocked.

6. Gas laser according to claim 4, characterized by the fact that the movable element fitted within the body of the first and second valves takes the form of a truncated cone frustrum (50) arranged to turn around its axis (52) and mounted in a seat (53) in the valve body having the same form, said cone frustrum being provided with two mutually perpendicular bores (54, 55), the axes (56, 57) of which are located in a plane (58) perpendicular to the axis (52) of the cone frustrum, the first bore (54) being along a diameter of a circle formed by the intersection of such plane and of the cone frustrum and the second bore (55) along a radius of the same circle so as to result in a T formed opening, said bores being placed at the same level as the orifices pierced in the valve body, said movable element being adapted to be placed in a first position in which the first, second and fourth orifices of the valve body are coupled, a second position in which the first, third and fourth orifices of the valve body are coupled and a third position in which the first, second and third orifices of the valve body are coupled.

7. Gas laser according to claim 6, characterized by the fact that the truncated movable element is terminated at each of its ends by a cylindrical extension (59, 60), a groove being formed in the periphery of said extensions so as to retain a packing element (61, 62) arranged to cooperate with cylindrical extensions (63, 64) borne by the seat of the valve body.

8. Gas laser according to claim 6, characterized by the fact that the truncated movable element is retained within the valve body by elastic means (67) and that said movable element bears a control handle (65).

9. Gas laser according to claim 6, characterized by the fact that the outer surface of the cone frustrum is coated with an antifriction layer.

EP 0 232 498 B1

Fig. 1

Fig. 2

Fig. 3.

Fig. 4a

Fig. 4b

Fig. 4c

3

Fig.5

Fig.6